# EUROPEAN PATENT APPLICATION

(11) **EP 4 765 452 A2**
(43) Date of publication of application: **24.06.2026**
(21) Application number: 26175236.4
(22) Date of filing: 10.01.2025
(51) Int. Cl.: H01M 50/536

(54) **BATTERY**

(30) Priority: 28.03.2024 CN 202410367706
(62) Divisional of application: 25151343.8
(71) Applicant: Zhuhai CosMX Battery Co., Ltd., Zhuhai, Guangdong 519180 (CN)
(72) Inventor: MU, Yingdi, Zhuhai, 519180 (CN); PEI, Jiajia, Zhuhai, 519180 (CN); LIN, Wenrong, Zhuhai, 519180 (CN); WANG, Hai, Zhuhai, 519180 (CN); LI, Suli, Zhuhai, 519180 (CN)
(74) Representative: Murgitroyd & Company

(57) **Abstract**

Disclosed is a battery, which is a high-safety battery with excellent high-temperature performance at high voltage. High-temperature cycling performance of a prepared battery can be improved effectively by adjusting and controlling a ratio of an area of a positive electrode welding region to a content of a cyano compound and a ratio of the area of the positive electrode welding region to a width of a positive tab, so that a metal conductor and a tab tape of the tab are more resistant to high temperature and high voltage, and an adhesive layer is stabilized. In addition, liquid leakage can be prevented, and safety performance of battery cell under conditions such as dropping of an entire battery cell and high furnace temperature can be improved.

## Description

### FIELD OF THE INVENTION

The present disclosure belongs to the field of battery technologies, and specifically relates to a battery.

### BACKGROUND OF THE INVENTION

In recent years, batteries have been widely used in smartphones, tablet computers, smart wearables, electric tools, electric vehicles, and other fields. With widespread use of batteries, consumers' requirements for energy density and use environment of the batteries are constantly increasing, which requires the batteries to have excellent high-temperature safety performance at high voltage.

Currently, there is a potential safety hazard during use of batteries. For example, when a battery is in some extreme use cases such as a continuous high temperature, a serious safety accident easily occurs, and a serious safety accident such as a fire or even an explosion caused by liquid leakage of a battery cell may occur. These problems are mainly caused by the following two aspects. First, because a positive tab is not resistant to corrosion of an electrolyte solution at high temperature and high voltage, metal ions in the positive tab are easily dissolved, and reduced and deposited on a negative electrode surface, thereby destroying an SEI (Solid electrolyte interface) film structure on the negative electrode surface, and resulting in an increasing negative electrode impedance and an increasing battery thickness. This makes a temperature of the battery cell continuously increase, and causes a safety accident when heat continues to accumulate without being released. Second, a tab tape swells due to the electrolyte solution, causing an interface between a metal conductor and a tab tape of the tab to be delaminated. As a result, liquid leakage is caused, which significantly reduces safety performance of the battery.

To overcome the foregoing technical problems, a lithium-ion battery with high safety needs to be developed urgently, and thus how to develop a battery without affecting electrochemical performance of the battery and having high safety is a technical problem that needs to be urgently resolved for lithium-ion batteries.

### BRIEF DESCRIPTION OF THE INVENTION

The present disclosure provides a battery, which is a high-safety battery with excellent high-temperature performance at high voltage, to resolve problems of gas generation during high-temperature storage of a battery cell, failure during high-temperature cycling, and moisture ingress and liquid leakage caused by gaps formed between a tab tape and a tab metal conductor by delamination due to electrolyte immersion and swelling of the tab tape, and these problems are caused when a positive tab of an existing battery is corroded by an electrolyte solution to dissolve metal ions and produce side reactions under high voltage and high temperature environment.

In the present disclosure, unless otherwise specified, the high voltage is above 4.45 V, and the high temperature is above 45°C.

To achieve the foregoing objective, the following technical solution is used in the present disclosure.

A battery is provided. The battery includes a positive electrode plate, a negative electrode plate, an electrolyte solution, and a separator.

The positive electrode plate includes a positive electrode current collector, a positive electrode active material layer, and a positive tab; the positive electrode active material layer is arranged on at least one side surface of the positive electrode current collector; and the positive tab is welded with the positive electrode current collector to form a positive electrode welding region.

The electrolyte solution includes an organic solvent, an electrolyte additive, and a lithium salt. The electrolyte additive includes a cyano compound.

An area of the positive electrode welding region is A mm²; a percentage of a mass of the cyano compound in a total mass of the electrolyte solution is B wt%; a width of the positive tab is C mm; a ratio of A to B ranges from 3 to 75; and a ratio of A to C ranges from 4 to 60.

The lithium salt includes a lithium bis(trifluoromethanesulphonyl)imide.

According to an implementation of the present disclosure, the ratio of A to B preferably ranges from 3 to 30. For example, the ratio of A to B is 3, 5, 10, 15, 20, 25, 30, 35, 40, 45, 50, 55, 60, 65, 70, or 75.

It is found through research that a current carrying capability of the positive tab varies with the area of the positive electrode welding region, and thus a degree of an electrochemical side reaction produced in the battery also varies. When the ratio of A to B ranges from 3 to 75, the content of the cyano compound is sufficient to protect the battery, so that the battery can adapt to positive electrode welding regions having different areas. This is mainly because cyano groups in the cyano compound may be sufficiently integrated with a protonic acid in the electrolyte solution. Therefore, on the premise that a side reaction in the battery is inhibited, corrosion of the electrolyte solution to the positive tab is reduced, dissolution of metal aluminum ions from the positive tab is inhibited, and problems such as gassing of a battery cell during high-temperature storage and high-temperature cycling are resolved. When the ratio of A to B is less than 3, an addition of the cyano compound is too large, which easily leads to a large film-forming impedance in the battery, increases polarization of the battery, and degrades performance of the battery. When the ratio of A to B is greater than 75, an addition of the cyano compound is insufficient, which leads to a poor effect of inhibiting a side reaction in the battery. As a result, high-temperature performance of the battery at high voltage cannot be improved.

For example, the ratio of A to C is 4, 6, 10, 15, 20, 25, 30, 35, 40, 45, 50, 55, or 60. According to an implementation of the present disclosure, the ratio of A to C preferably ranges from 4 to 35.

According to an implementation of the present disclosure, it is found through research that when the ratio of A to C ranges from 4 to 60, the positive tab can be securely welded onto the positive electrode current collector, and a current carried by the positive electrode welding region is large enough to ensure that the battery has excellent charging and cycling performance. When the ratio of A to C is less than 4, the positive tab is welded insecurely, and a current carried by the positive electrode welding region is too small. As a result, an internal impedance of the battery is large, which does harm to cycling performance of the battery. When the ratio of A to C is greater than 60, the positive tab can be securely welded onto the positive electrode current collector, but the area of the positive electrode welding region is too large. As a result, a current carried by the positive electrode welding region is too large, which easily causes an excessive temperature rise in the battery, exacerbates occurrence of a side reaction in the battery, and degrades high-temperature performance of the battery.

According to an implementation of the present disclosure, the area A of the positive electrode welding region ranges from 10 mm² to 650 mm², and preferably ranges from 20 mm² to 350 mm², for example, is 10 mm², 20 mm², 30 mm², 40 mm², 50 mm², 60 mm², 70 mm², 80 mm², 90 mm², 100 mm², 120 mm², 150 mm², 180 mm², 200 mm², 220 mm², 240 mm², 250 mm², 280 mm², 300 mm², 320 mm², 350 mm², 400 mm², 450 mm², 500 mm², 550 mm², 600 mm², or 650 mm².

According to an implementation of the present disclosure, the width C of the positive tab ranges from 1.5 mm to 25 mm, and preferably ranges from 2 mm to 10 mm, for example, is 1.5 mm, 2 mm, 2.5 mm, 3 mm, 4 mm, 5 mm, 6 mm, 7 mm, 8 mm, 9 mm, 10 mm, 12 mm, 15 mm, 18 mm, 20 mm, 22 mm, 24 mm, or 25 mm.

According to an implementation of the present disclosure, the mass percentage B of the cyano compound ranges from 0.5 wt% to 10 wt%, and preferably ranges from 2 wt% to 8 wt%, for example, is 0.5 wt%, 1 wt%, 2 wt%, 3 wt%, 4 wt%, 5 wt%, 6 wt%, 7 wt%, 8 wt%, 9 wt%, or 10 wt%. When the mass percentage B of the cyano compound ranges from 0.5 wt% to 10 wt%, the cyano compound can sufficiently form a film in the battery cell for protection, thereby inhibiting generation of a hydrofluoric acid and inhibiting occurrence of an electrochemical side reaction. In addition, corrosion of the hydrofluoric acid to the positive tab can also be avoided, thereby avoiding the following problem: because the positive tab is not resistant to corrosion of the electrolyte solution at high voltage, metal ions in the positive tab are dissolved, and reduced and deposited on a negative electrode surface, thereby destroying an SEI film structure on the negative electrode surface. When the mass percentage B of the cyano compound is less than 0.5 wt%, the content of the cyano compound is too small to produce a protection effect. When the mass percentage B of the cyano compound is greater than 10 wt%, the content of the cyano compound is too large. As a result, an excessive protection effect is produced; a film-forming impedance is large; polarization of the battery cell is increased; and performance of the battery is degraded.

According to an implementation of the present disclosure, the cyano compound includes at least one of 1,2-bis(cyanoethoxy)ethane, 1,2,3-tris(2-cyanoethoxy)propane, adiponitrile, succinonitrile, 1,3,6-hexanetricarbonitrile, glutaronitrile, 1,5-dicyanopentane, 1,6-dicyanohexane, 1,7-dicyanoheptane, 1,8-dicyanooctane, 1,9-dicyanononane, 1,10-dicyanodecane, 1,12-dicyanododecane, tetramethylsuccinonitrile, 2-methylglutaronitrile, 2,4-dimethylglutaronitrile, 2,2,4,4-tetramethylglutaronitrile, 1,4-dicyanopentane, 2,6-dicyanoheptane, 2,7-dicyanooctane, 2,8-dicyanononane, 1,6-dicyanodecane, 1,2-dicyanobenzene, 1,3-dicyanobenzene, 1,4-dicyanobenzene, 3,5-dioxa-pimelonitrile, 1,4-bis(cyanoethoxy)butane, ethylene glycol bis(2-cyanoethyl) ether, diethylene glycol bis(2-cyanoethyl) ether, triethylene glycol bis(2-cyanoethyl) ether, tetraethylene glycol bis(2-cyanoethyl) ether, 3,6,9,12,15,18-hexaoxeicosanic acid dinitrile, 1,3-bis(2-cyanoethoxy)propane, 1,4-bis(2-cyanoethoxy)butane, 1,5-bis(2-cyanoethoxy)pentane, ethylene glycol di(4-cyanobutyl) ether, 1,4-dicyano-2-butene, 1,4-dicyano-2-methyl-2-butene, 1,4-dicyano-2-ethyl-2-butene, 1,4-dicyano-2,3-dimethyl-2-butene, 1,4-dicyano-2,3-diethyl-2-butene, 1,6-dicyano-3-hexene, 1,6-dicyano-2-methyl-3-hexene, 1,6-dicyano-2-methyl-5-methyl-3-hexene, 1,3,5-pentanetricarbonitrile, 1,2,3-propanetricarbonitrile, 1,2,6-hexanetricarbonitrile, 1,2,3-tris(2-cyanoethoxy)propane, 1,2,4-tris(2-cyanoethoxy)butane, 1,1,1-tris(cyanoethoxymethylene)ethane, 1,1,1-tris(cyanoethoxymethylene)propane, 3-methyl-1,3,5-tris(cyanoethoxy)pentane, 1,2,7-tris(cyanoethoxy)heptane, 1,2,6-tris(cyanoethoxy)hexane, or 1,2,5-tris(cyanoethoxy)pentane.

According to an implementation of the present disclosure, the cyano compound includes at least one of compounds represented by Formula (1) to Formula (4).

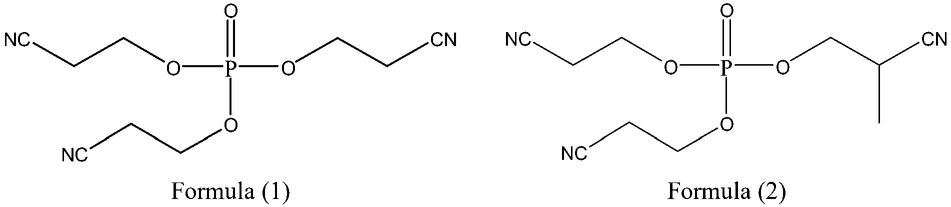

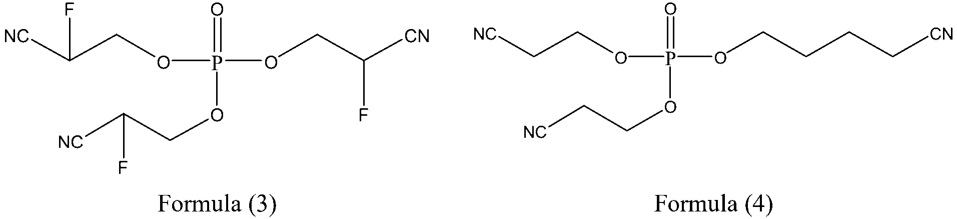

According to an implementation of the present disclosure, the electrolyte additive further includes another additive whose content accounts for 0 wt% to 10 wt% of the total mass of the electrolyte solution; and the another additive includes at least one of 1,3-propane sultone, 1-propene 1,3-sultone, fluoroethylene carbonate, ethylene sulphite, ethylene sulfate, lithium bis(oxalate)borate, lithium difluorophosphate, lithium difluoro oxalate phosphate, or vinyl ethylene carbonate.

According to an implementation of the present disclosure, the organic solvent includes at least one of cacrbonic acid ester, carboxylic acid ester, or fluorinated ether; the cacrbonic acid ester includes one or more of ethylene carbonate, propylene carbonate, dimethyl carbonate, ethyl methyl carbonate, diethyl carbonate, or methyl propyl carbonate; the carboxylic acid ester includes one or more of ethyl propionate, propyl propionate, propyl acetate, n-butyl acetate, isobutyl acetate, n-amyl acetate, isoamyl acetate, methyl butyrate, or ethyl butyrate; and the fluorinated ether includes one or more of 1,1,2,3-tetrafluoroethyl-2,2,3,3-tetrafluoropropyl ether, ethyl fluoroacetate, or dimethyl ethyl fluoroacetate.

According to an implementation of the present disclosure, the lithium salt includes at least one of lithium hexafluorophosphate (LiPF₆), lithium difluorophosphate (LiPO₂F₂), lithium difluoro(oxalato)borate (LiDFOB), lithium bis(fluorosulfonyl)imide (LiTFSI), lithium bis(trifluoromethanesulphonyl)imide, lithium difluorobis(oxalato)phosphate, lithium tetrafluoroborate, lithium bisoxalate borate, lithium hexafluoroantimonate, lithium hexafluoroarsenate, lithium bis(pentafluoroethanesulfonyl)imide, or tris(trifluoromethylsulfonyl)methyl lithium.

According to an implementation of the present disclosure, relative to a total mass of the electrolyte solution, a concentration of the lithium salt ranges from 1 mol/L to 6 mol/L, for example, is 1 mol/L, 1.5 mol/L, 2 mol/L, 2.5 mol/L, 3 mol/L, 3.5 mol/L, 4 mol/L, 4.5 mol/L, 5 mol/L, or 6 mol/L.

According to an implementation of the present disclosure, the positive electrode welding region is a region formed by welding the positive electrode current collector and the positive tab; the positive tab is electrically connected to the positive electrode current collector; the positive electrode current collector is connected to the positive tab via welding; a region of the welding is the positive electrode welding region; and an area of the welding is the area of the positive electrode welding region. The positive electrode current collector is connected to the metal conductor of the positive tab via welding. A dimension of the positive tab in the length direction of the positive electrode plate is measured as the width of the positive tab.

According to an implementation of the present disclosure, the area of the positive electrode welding region accounts for more than 60% of an area of a positive electrode contact region; and the area of the positive electrode contact region is an area of a region formed by projecting the positive tab onto a surface of the positive electrode plate.

According to an implementation of the present disclosure, the area of the positive electrode welding region accounts for 60% to 90% of the area of the positive electrode contact region, for example, is 60%, 65%, 70%, 75%, 80%, 85%, or 90%. When the area of the positive electrode welding region accounts for less than 60% of the area of the positive electrode contact region, the positive tab is welded insecurely, which easily exacerbates corrosion to the positive tab under a high-voltage and high-temperature condition, resulting in a short circuit problem and substandard safety performance of the battery. As a result, practical application cannot be realized.

According to an implementation of the present disclosure, the positive tab includes a metal conductor and a tab tape covering a surface of the metal conductor.

According to an implementation of the present disclosure, the positive tab includes a metal conductor and a tab tape; a first end of the metal conductor is a welding end; a second end, opposite the first end, of the metal conductor is a protruding end; a tab tape region is formed between the welding end and the protruding end; the tab tape is provided on the tab tape region; and the tab tape surrounds the metal conductor for one circle.

According to an implementation of the present disclosure, the tab tape includes a first resin outer layer, a second resin core layer, and a third resin inner layer; and the second resin core layer is arranged between the first resin outer layer and the third resin inner layer, that is, the first resin outer layer, the second resin core layer, and the third resin inner layer are compounded together.

According to an implementation of the present disclosure, the third resin inner layer is in contact with the metal conductor.

According to an implementation of the present disclosure, a material of the first resin outer layer is one or more of a propylene-ethylene copolymer, a butene-propylene copolymer, polyethylene, polypropylene, maleic anhydride-grafted modified polypropylene, or metallocene-modified polypropylene.

According to an implementation of the present disclosure, a material of the second resin core layer is one or both of polypropylene or anhydride-grafted modified polypropylene (such as maleic anhydride-grafted modified polypropylene).

According to an implementation of the present disclosure, a material of the third resin inner layer is one or more of a propylene-ethylene copolymer, a butene-propylene copolymer, polyethylene, polypropylene, maleic anhydride-grafted modified polypropylene, or metallocene-modified polypropylene.

According to an implementation of the present disclosure, the first resin outer layer has a melting point ranging from 100°C to 140°C and a thickness ranging from 10 µm to 30 µm; the second resin core layer has a melting point ranging from 140°C to 180°C and a thickness ranging from 30 µm to 70 µm; and the third resin inner layer has a melting point ranging from 100°C to 140°C and a thickness ranging from 10 µm to 30 µm. When the tab tape meets the foregoing definition, swelling of the tab tape in the electrolyte solution can be avoided effectively, thereby avoiding problems such as liquid leakage caused when an interface between the metal conductor and the tab tape of the tab is delaminated due to swelling. As a result, safety performance of the battery is reduced significantly.

In the present disclosure, the melting point is tested according to the following method: discharging a lithium-ion battery to 3 V; disassembling the battery; taking a tab tape pasted on a surface of a positive electrode plate or negative electrode plate; wiping off an electrolyte solution to obtain a tab tape sample; and testing DSC curves of the tab tape sample by using a differential scanning calorimeter (DSC). The tab tape sample taken out according to the foregoing method is immersed in dichloromethane at room temperature for 24 hours, which may ensure that a first adhesive layer, a second adhesive layer, and a third adhesive layer are separated; airing is carried out at room temperature; then, DSC curves of the first adhesive layer, the second adhesive layer, and the third adhesive layer are tested separately by using the differential scanning calorimeter; and the DSC curves are analyzed to obtain a melting point T1 of the first adhesive layer, a melting point T2 of the second adhesive layer, and a melting point T3 of the third adhesive layer. The differential scanning calorimeter has an instrument model of DSC 214 and is provided by NETZSCH of German. An aluminum crucible is used for the test; weight of the sample is 2 mg; a temperature range of the test is set to 60°C to 200°C; and a heating rate is 10°C/min.

According to an implementation of the present disclosure, the positive electrode plate further includes adhesive paper; and the adhesive paper is arranged on a surface, away from the positive electrode current collector, of the positive tab. Due to arrangement of the adhesive paper, problems such as a short circuit caused when a separator is punctured by a bur formed on a surface of the positive tab during welding can be prevented. Therefore, safety of the battery can be improved effectively due to arrangement of the adhesive paper. Preferably, the adhesive paper is in contact with a tab tape on a surface of the positive tab.

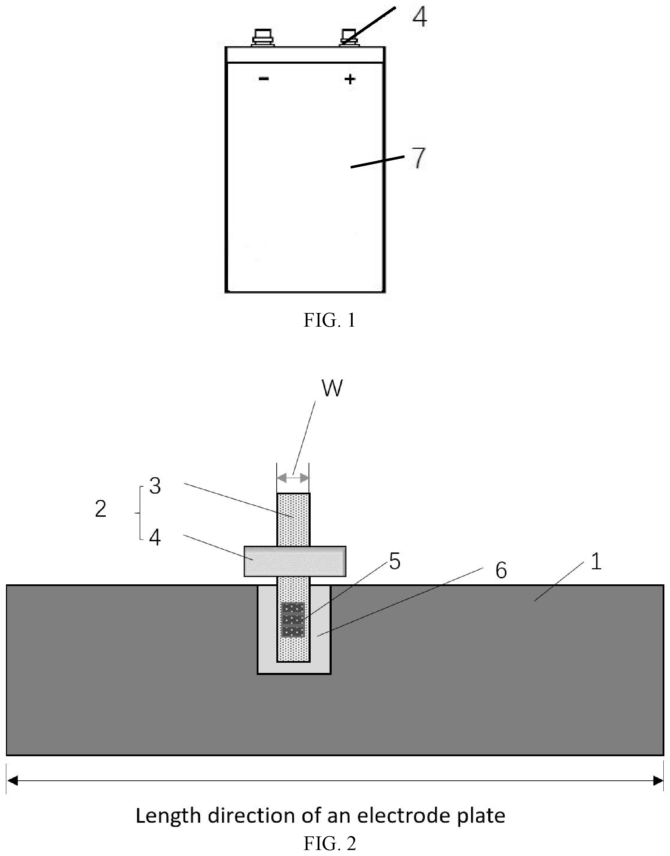

According to an implementation of the present disclosure, the positive electrode plate 1 includes a positive electrode current collector, a positive electrode active material layer, and a positive tab 2; the positive electrode active material layer is arranged on at least one side surface of the positive electrode current collector; the positive tab 2 is welded with the positive electrode current collector to form a positive electrode welding region 5; and the positive tab 2 includes a metal conductor 3 and a tab tape 4 covering a surface of the metal conductor 3. The positive electrode plate 1 further includes adhesive paper 6; and the adhesive paper 6 is arranged on a surface, away from the positive electrode current collector, of the positive tab 1, for example, as shown in FIG. 2. The width W of the positive tab, as shown in FIG. 2, is parallel to the length direction of the positive electrode plate.

According to an implementation of the present disclosure, the positive electrode plate includes a positive electrode current collector and a positive electrode active material layer coated on a surface of either or both sides of the positive electrode current collector; and the positive electrode active material layer includes a positive electrode active material, a conductive agent, and a binder.

According to an implementation of the present disclosure, the positive electrode active material is selected from lithium cobalt oxide or lithium cobalt oxide doped and coated with two or more elements of Al, Mg, Mn, Cr, Ti, or Zr. A chemical formula of the lithium cobalt oxide doped and coated with two or more elements of Al, Mg, Mn, Cr, Ti, or Zr is LiₓCo_{y}A_{y1}B_{y2}C_{y3}D_{y4}O₂, where 0.95 ≤ x ≤ 1.05, 0.71 ≤ y ≤ 0.98, 0.01 ≤ y1 ≤ 0.1, 0.01 ≤ y2 ≤ 0.1, 0 ≤ y3 ≤ 0.1, 0 ≤ y4 ≤ 0.1, and A, B, C, and D are selected from at least one element of Al, Mg, Mn, Cr, Ti, Zr, Y, La, B, or P and are different from one another.

According to an implementation of the present disclosure, the negative electrode plate includes a negative electrode current collector and a negative electrode active material layer coated on a surface of either or both sides of the negative electrode current collector; and the negative electrode active material layer includes a negative electrode active material, a conductive agent, and a binder.

According to an implementation of the present disclosure, the negative electrode active material includes a silicon-based negative electrode material and/or a carbon-based negative electrode material.

According to an implementation of the present disclosure, the silicon-based negative electrode material includes at least one of nano silicon (Si), a silicon-oxygen negative electrode material (SiOₓ (0 < x < 2)), or a silicon-carbon negative electrode material.

According to an implementation of the present disclosure, the carbon-based negative electrode material includes at least one of artificial graphite, natural graphite, mesocarbon microbead, hard carbon, or soft carbon.

According to an implementation of the present disclosure, a charge cut-off voltage of the battery is 4.45 V or above.

According to an implementation of the present disclosure, the battery is a lithium-ion battery.

According to an implementation of the present disclosure, the lithium-ion battery is a lithium-ion secondary battery.

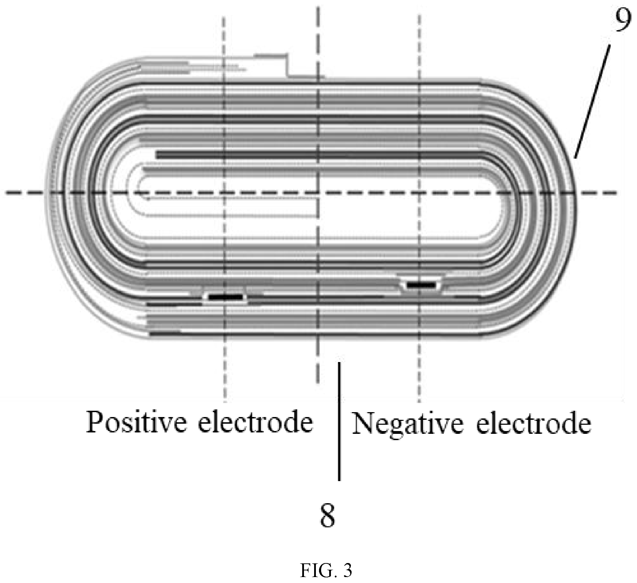

According to an implementation of the present disclosure, the battery may be a pouch battery. The pouch battery includes an outer membrane shell 7 defining a battery cell accommodating chamber and a battery cell arranged in the battery cell accommodating chamber. The battery cell includes a positive electrode plate, a separator, a negative electrode plate, and an electrolyte solution that are stacked. The positive electrode plate, the separator, and the negative electrode plate are wound to form flat regions 8 and bending regions 9, as shown in FIG. 1 and FIG. 3. As shown in FIG. 1, the tab tape 4 is located outside the outer membrane shell 7.

In the present disclosure, the term "ranges from ... to ..." includes endpoint values. For example, "ranges from 4 to 60" indicates greater than or equal to 4 and less than or equal to 60.

Beneficial effects of the present disclosure are as follows.

The present disclosure provides a battery that is a high-safety battery with excellent high-temperature performance at high voltage. Inventors of the present disclosure have found through research that high-temperature cycling performance of a prepared battery can be improved effectively by adjusting and controlling a ratio of an area of a positive electrode welding region to a content of a cyano compound and a ratio of the area of the positive electrode welding region to a width of a positive tab, so that a metal conductor and a tab tape of the tab are more resistant to high temperature and high voltage, and an adhesive layer is stabilized. In addition, liquid leakage can be prevented, and safety performance of battery cell under conditions such as dropping of an entire battery cell and high furnace temperature can be improved. This is mainly because the cyano compound in the electrolyte solution can more sufficiently capture a protonic acid and inhibit generation of a hydrofluoric acid. Especially in a high-voltage silicon-doped negative electrode system, faced with the problem that an SEI film fractures and recombines more easily, the cyano compound can inhibit generation of a side reaction in a battery system, reduce corrosion of the electrolyte solution to the positive tab, and inhibit dissolution of metal aluminum ions from the positive tab. After capturing the protonic acid, the cyano compound can also avoid corrosion and damage of the protonic acid at high voltage to the metal conductor and the adhesive layer of the tab tape, thereby protecting an interface between the metal conductor and the tab tape of the tab from being delaminated, greatly increasing an adhesion force between the tab tape and the metal conductor, and improving air-tightness of the battery cell to prevent water and gas from entering there. This not only improves safety performance of battery cell under conditions such as dropping of an entire battery cell and extrusion, but also achieves a comprehensive improvement in electrical performance. In addition, Co dissolution is prevented, to avoid damage to the tab tape and a tab region.

Specifically, when the ratio of A to B ranges from 3 to 75, the content of the cyano compound is sufficient to protect the battery, so that the battery can adapt to positive electrode welding regions having different areas. This is mainly because cyano groups in the cyano compound may be sufficiently integrated with a protonic acid in the electrolyte solution. Therefore, on the premise that a side reaction in the battery is inhibited, corrosion of the electrolyte solution to the positive tab is reduced, dissolution of metal aluminum ions from the positive tab is inhibited, and problems such as gassing of a battery cell during high-temperature storage and high-temperature cycling are resolved. When the ratio of A to C ranges from 4 to 60, the positive tab can be securely welded onto the positive electrode current collector, and a current carried by the positive electrode welding region is large enough to ensure that the battery has excellent charging and cycling performance.

### BRIEF DESCRIPTION OF THE DRAWINGS

FIG. 1 is a schematic structural diagram of a pouch battery according to the present disclosure.
FIG. 2 is a schematic structural diagram of a positive electrode welding region of a battery according to the present disclosure.
FIG. 3 is a schematic structural diagram of a wound lithium-ion battery according to the present disclosure.

### DETAILED DESCRIPTION OF THE INVENTION

The following further describes in detail the present disclosure with reference to specific embodiments. It should be understood that the following examples are merely for the purposes of illustrating and explaining the present disclosure, and should not be construed as limiting the protection scope of the present disclosure. All technologies achieved based on the foregoing content of the present disclosure are included in the protection scope of the present disclosure.

Experimental methods used in the following examples are all conventional methods, unless otherwise specified. Reagents, materials, and the like used in the following examples are all commercially available, unless otherwise specified.

A positive tab used in the following examples includes a metal conductor and a tab tape. A first end of the metal conductor is a welding end. A second end, opposite the first end, of the metal conductor is a protruding end. A tab tape region is formed between the welding end and the protruding end. The tab tape is provided on the tab tape region. The tab tape surrounds the metal conductor for one circle. The tab tape includes a first resin outer layer, a second resin core layer, and a third resin inner layer. The second resin core layer is arranged between the first resin outer layer and the third resin inner layer, that is, the first resin outer layer, the second resin core layer, and the third resin inner layer are compounded together. The first resin outer layer has a thickness of 20 µm. The second resin core layer has a thickness of 40 µm. The third resin inner layer has a thickness of 20 µm.

### Comparative Examples and Examples

Lithium-ion batteries in the comparative examples and examples were prepared according to the following preparation method, and a difference lies only in that negative electrode systems, widths of tabs, tab welding areas, and compositions of electrolyte solutions were different. The difference is specifically shown in Table 1.

### (1) Preparation of a positive electrode plate

As shown in FIG. 2, the positive electrode plate 1 includes a positive electrode current collector, a positive electrode active material layer, and a positive tab 2; the positive electrode active material layer is arranged on two side surfaces of the positive electrode current collector; and the positive tab 2 is welded with the positive electrode current collector to form a positive electrode welding region 5. The positive tab 2 includes a metal conductor 3 and a tab tape 4 covering a surface of the metal conductor 3. The positive electrode plate 1 further includes adhesive paper 6; and the adhesive paper 6 is arranged on a surface, away from the positive electrode current collector, of the positive tab 1. The width W of the positive tab, as shown in FIG. 2, is parallel to the length direction of the positive electrode plate.

A positive electrode active material LiCoO₂, a binder polyvinylidene fluoride (PVDF), and a conductive agent acetylene black were mixed at a weight ratio of 97.2:1.3:1.5, added with N-methylpyrrolidone (NMP). The mixture was stirred under action of a vacuum mixer until a mixed system became a positive electrode slurry with uniform fluidity. The positive electrode slurry was evenly applied on aluminum foil having a thickness of 12 µm. The coated aluminum foil was baked in a five-stage oven with different temperatures and then dried in an oven at 120°C for 8 hours, followed by roll-pressing and cutting, to obtain the positive electrode plate. A required positive tab was selected and welded onto the positive electrode current collector, where an area of the positive electrode welding region accounted for 80% of an area of a positive electrode contact region; and the width of the positive tab and the area of the positive electrode welding region are shown in Table 1. In Table 1, 1,2-bis(cyanoethoxy)ethane is DENE; 1,2,3-tris(2-cyanoethoxy)propane is glycerol trinitrile; 1,3,6-hexanetricarbonitrile is HTCN; 1,4-dicyano-2-butene is DCB; A denotes an area of a positive tab welding region; B denotes a mass percentage of a cyano compound; C is a width of a positive tab; and the tab tape melting points are a melting point of a first resin outer layer-a melting point of a second resin core layer-a melting point of a third resin inner layer.

### (2) Preparation of a negative electrode plate

Silicon negative electrode system: a silicon-carbon negative electrode material (formed by compounding SiC and graphite, where a mass proportion of SiC was 3 wt%, and a mass proportion of graphite was 97 wt%) with a mass proportion of 95.9%, a conductive agent single-walled carbon nanotube (SWCNT) with a mass proportion of 0.1 wt%, a conductive agent conductive carbon black (SP) with a mass proportion of 1 wt%, a binder sodium carboxymethyl cellulose (CMC) with a mass proportion of 1 wt%, and a binder styrene-butadiene rubber (SBR) with a mass proportion of 2 wt% were made into a slurry by using a wet process. The slurry was applied on a surface of a negative electrode current collector with copper foil, and then baking (temperature: 85°C, time: 5 hours), roll-pressing, and die cutting were carried out to obtain the silicon-carbon negative electrode plate.

Graphite negative electrode system: a negative electrode material artificial graphite with a mass proportion of 96.5%, a conductive agent single-walled carbon nanotube (SWCNT) with a mass proportion of 0.1%, a conductive agent conductive carbon black (SP) with a mass proportion of 1%, a binder sodium carboxymethyl cellulose (CMC) with a mass proportion of 1%, and a binder styrene-butadiene rubber (SBR) with a mass proportion of 1.4% were made into a slurry by using a wet process. The slurry was applied on a surface of a negative electrode current collector with copper foil, and then baking (temperature: 85°C, time: 5 hours), roll-pressing, and die cutting were carried out to obtain the graphite negative electrode plate.

### (3) Preparation of an electrolyte solution

In an argon-filled glove box (moisture < 10 ppm, oxygen < 1 ppm), ethylene carbonate (EC), propylene carbonate (PC), propyl propionate (PP), and ethyl propionate (EP) were evenly mixed at a mass ratio of 1:1:3:1, and LiPF₆ accounting for 15 wt% of a total mass of the electrolyte solution and an electrolyte additive (specific amounts and selection of the additive are shown in Table 1) were slowly added into the mixed solution. The mixture was stirred evenly to obtain the non-aqueous electrolyte solution.

### (4) Preparation of a separator

A composite layer formed by mixing titanium oxide and a polyvinylidene fluoride-hexafluoropropylene copolymer and having a thickness of 2 µm was coated on a polyethylene separator having a thickness of 5 µm.

### (5) Preparation of a lithium-ion battery

The foregoing prepared positive electrode plate, separator, and negative electrode plate were wound to obtain an unfilled bare cell. The bare cell was placed in an outer packaging foil, the prepared electrolyte solution was injected into the dried bare cell, and after processes such as vacuum packaging, standing, forming, shaping, and sorting, the lithium-ion battery required was obtained.

**Table 1 Lithium-ion batteries prepared in the comparative examples and examples**

| Item | A mm² | B% | C mm | A/B | A/C | Negative electrode system | Tab tape melting points |
|---|---|---|---|---|---|---|---|
| Comparative Example 1 | 180 | / | 6 | / | 30 | Silicon negative electrode system | 120°C-160°C-120°C |
| Comparative Example 2 | 180 | 2% DENE | 6 | 90 | 30 | Silicon negative electrode system | 120°C-160°C-120°C |
| Comparative Example 3 | 180 | 2% DENE+3% glycerol trinitrile | 2 | 36 | 90 | Silicon negative electrode system | 120°C-160°C-120°C |
| Comparative Example 4 | 360 | 2% DENE+3% glycerol trinitrile | 6 | 132 | 110 | Silicon negative electrode system | 120°C-160°C-120°C |
| Example 1 | 180 | 2% DENE+3% glycerol trinitrile | 6 | 36 | 30 | Silicon negative electrode system | 120°C-160°C-120°C |
| Example 2 | 25.5 | 2% succinonitrile+3% adiponitrile+3.5% 1,6-dicyanohexane | 1.5 | 3 | 17 | Silicon negative electrode system | 120°C-160°C-120°C |
| Example 3 | 10 | 0.5% HTCN | 2.5 | 20 | 4 | Graphite negative electrode system | 120°C-160°C-120°C |
| Example 4 | 10 | 0.2% HTCN | 2.5 | 50 | 4 | Graphite negative electrode system | 120°C-160°C-120°C |
| Example 5 | 500 | 2% Formula (1)+3% Formula (2)+3% HTCN | 8.5 | 62.5 | 58.8 | Silicon negative electrode system | 120°C-160°C-120°C |
| Example 6 | 650 | 3% glycerol trinitrile+2.5% succinonitrile+1% Formula (1)+2.5% glutaronitrile | 25°C | 72.2 | 26 | Silicon negative electrode system | 120°C-160°C-120°C |
| Example 7 | 240 | 2% Formula (1)+3% glycerol trinitrile | 10 | 48 | 24 | Graphite negative electrode system | 120°C-160°C-120°C |
| Example 8 | 300 | 1% Formula (1)+3% glycerol trinitrile+2% succinonitrile | 8 | 50 | 37.5 | Graphite negative electrode system | 120°C-160°C-120°C |
| Example 9 | 120 | 2% HTCN+1% succinonitrile+1% Formula (4) | 8 | 30 | 15 | Silicon negative electrode system | 120°C-140°C-120°C |
| Example 10 | 120 | 2% HTCN+1% succinonitrile+1% Formula (4) | 8 | 30 | 15 | Silicon negative electrode system | 90°C-120°C-90°C |
| Example 11 | 100 | 3% glycerol trinitrile+2.5% succinonitrile | 9 | 18.2 | 11.1 | Silicon negative electrode system | 100°C-160°C-100°C |
| Example 12 | 100 | 3% glycerol trinitrile+2.5% succinonitrile | 9 | 18.2 | 11.1 | Graphite negative electrode system | 100°C-160°C-100°C |
| Example 13 | 132 | 1% Formula (1)+3% Formula (3)+1% HTCN | 8 | 26.4 | 16.5 | Silicon negative electrode system | 120°C-160°C-120°C |
| Example 14 | 400 | 3% DENE+3% glycerol trinitrile+4% HTCN | 8 | 40 | 50 | Silicon negative electrode system | 120°C-180°C-120°C |
| Example 15 | 180 | 2% DENE+3% glycerol trinitrile | 35 | 36 | 5.14 | Silicon negative electrode system | 120°C-160°C-120°C |
| Example 16 | 132 | 0.5% DCB+3% adiponitrile+2% HTCN | 8 | 26.4 | 16.5 | Silicon negative electrode system | 120°C-160°C-120°C |
| Example 17 | 132 | 0.5% DCB | 8 | 26.4 | 16.5 | Silicon negative electrode system | 120°C-160°C-120°C |
| Example 18 | 132 | 2% DCB | 8 | 26.4 | 16.5 | Silicon negative electrode system | 120°C-160°C-120°C |
| Example 19 | 132 | 0.2% DCB+1% succinonitrile+1.5% adiponitrile+2% HTCN | 8 | 26.4 | 16.5 | Silicon negative electrode system | 120°C-160°C-120°C |
| Example 20 | 132 | 0.2% DCB+1% succinonitrile+1% adiponitrile+0.5% DENE+2.5% HTCN | 8 | 26.4 | 16.5 | Silicon negative electrode system | 120°C-160°C-120°C |
| Example 21 | 132 | 2% DCB | 8 | 26.4 | 16.5 | Graphite negative electrode system | 120°C-160°C-120°C |

The batteries obtained in the foregoing comparative examples and examples were tested for electrochemical performance. The related descriptions are as follows.

### (1) 45°C cycling test

Initial thicknesses T of batteries were tested. Then, the batteries obtained in the foregoing examples and comparative examples were placed in an environment of (45±2)°C to stand for 2 to 3 hours. When the battery bodies reached (45±2)°C, the batteries were charged at 2C and a constant current to a cut-off current of 0.05 C. After the batteries were fully charged, the batteries were left aside for 5 minutes, and then discharged at 0.7C and a constant current to a cut-off voltage of 3.0 V. A highest discharge capacity for the first three cycles was recorded as an initial capacity Q. When the number of cycles reached 500, the last discharge capacity of the battery was recorded as Q₁. Capacity retention rates were calculated; a thickness T₁ of the batteries was tested; and whether the battery bodies produce gas was determined based on thickness change rates of the batteries, where when a thickness change rate was less than 10%, "None gassing" was recorded; when a thickness change rate ranged from 10% to 20%, "Gassing" was recorded; and when a thickness change rate was greater than 20%, "Severe gassing" was recorded. The recorded results are shown in Table 2.

The calculation formulas used are as follows: Capacity retention rate (%) = Q₁/Q × 100%; and Thickness change rate = (T₁ - T)/T ×100%.

### (2) 60°C high-temperature and high-humidity storage test for 21 days

The batteries obtained in the foregoing examples and comparative examples were discharged at 0.5C, left aside for 5 minutes, and then charged at 0.7C. These operations were cycled twice under the same conditions, where a discharge capacity for the second cycle was used as an initial capacity Q₂. After the fully charged batteries/battery cells were left open-circuited for 21 days at (60±2)°C and humidity ranging from 90% to 95%, and then left open-circuited for 2 hours at room temperature, a cooling thickness T₂ was tested. The batteries were discharged at 0.5C and a constant current to 3.0 V, where an obtained capacity was recorded as a remaining capacity. Then, the batteries were charged at 0.7C, left aside for 5 minutes, and then discharged at 0.5C. These operations were cycled for three times, where a highest capacity was recorded as a recovery capacity Q₃. Experimental data, such as a recovery capacity retention rate and whether a battery body produces gas, after high-temperature and high-humidity storage of the batteries was obtained through calculation. Recorded results are shown in Table 2.

The calculation formulas used are as follows: Capacity retention rate (%) = Q₃/Q₂ × 100%; and Thickness change rate = (T₂ - T)/T ×100%.

### (3) Safety test

Thermal shock test at 130°C: the batteries obtained in the foregoing examples and comparative examples were heated in a convection mode or by using a circulating hot air box at a start temperature of (25±3)°C, with a temperature change rate of (5±2)°C/min. The temperature was raised to (130±2)°C, the batteries were kept at the temperature for 60 minutes, and then the test ended. The recorded status results of the batteries are shown in Table 2.

Overcharge test: the batteries obtained in the foregoing examples and comparative examples were charged at a rate of 3C and a constant current to 5 V. A battery status was recorded. The recorded results are shown in Table 2.

Squeeze test: after being fully charged at 0.7C, the batteries obtained in the foregoing examples and comparative examples were placed between two planes, and were squeezed in directions perpendicular to electrode plates, where squeezing forces of (13.0±0.78) kN were exerted on the two planes; and a battery squeezing speed was 0.1 mm/s. The squeeze test may be stopped once a voltage reached a maximum value or a voltage of the battery dropped by one third. During the test, the battery should be prevented from short circuiting externally. Recorded status results of the battery are shown in Table 2.

Drop test of an entire battery cell: the batteries obtained in the foregoing examples and comparative examples were discharged at 0.5C at (25±5)°C to a lower voltage limit, and then fully charged at 0.2C to a cut-off current of 0.02 C. A fully charged battery cell dropped freely from a position at a height of 1 m onto a concrete board, where the battery cell dropped freely once in each of six directions (a forward X direction, a reverse X direction, a forward Y direction, a reverse Y direction, a forward Z direction, and a reverse Z direction). Recorded status results of the battery are shown in Table 2.

Results of the safety test are reflected in the form of "Number of batteries passed the safety test/number of tested batteries".

**Table 2 Experimental test results of batteries obtained in the comparative examples and examples**

| Group | 500 cycles at 2C and 45°C | | 60°C high-temperature and high-humidity storage test for 21 days | | Safety test (passing standards: no fire, no explosion, and no liquid leakage) | | | |
|---|---|---|---|---|---|---|---|---|
| | Capacity retention rate (%) | Gassing status after cycles | Capacity retention rate (%) | Gassing status after storage | Thermal shock for 60 minutes at 130°C | Overcharge test | Squeeze test | Drop test |
| Comparative Example 1 | 24.3% | Severe gassing | 41.5% | Severe gassing | 0/5 | 0/5 | 0/5 | 0/5 |
| Comparative Example 2 | 55.5% | Gassing | 62.2% | Gassing | 0/5 | 0/5 | 0/5 | 0/5 |
| Comparative Example 3 | 58.2% | Gassing | 63.5% | Gassing | 1/5 | 1/5 | 1/5 | 1/5 |
| Comparative Example 4 | 39.3% | Gassing | 54.8% | Gassing | 0/5 | 0/5 | 0/5 | 0/5 |
| Example 1 | 77.3% | None gassing | 78.9% | None gassing | 5/5 | 5/5 | 5/5 | 5/5 |
| Example 2 | 83.2% | None gassing | 85.4% | None gassing | 5/5 | 5/5 | 5/5 | 5/5 |
| Example 3 | 84.6% | None gassing | 85.3% | None gassing | 5/5 | 5/5 | 5/5 | 5/5 |
| Example 4 | 72.8% | None gassing | 74.1% | None gassing | 3/5 | 4/5 | 3/5 | 4/5 |
| Example 5 | 73.9% | None gassing | 76.6% | None gassing | 5/5 | 5/5 | 5/5 | 5/5 |
| Example 6 | 74.4% | None gassing | 77.1% | None gassing | 5/5 | 5/5 | 5/5 | 5/5 |
| Example 7 | 77.2% | None gassing | 79.3% | None gassing | 5/5 | 5/5 | 5/5 | 5/5 |
| Example 8 | 78.1% | None gassing | 78.7% | None gassing | 5/5 | 5/5 | 5/5 | 5/5 |
| Example 9 | 83.2% | None gassing | 87.0% | None gassing | 5/5 | 5/5 | 5/5 | 5/5 |
| Example 10 | 71.9% | None gassing | 77.9% | None gassing | 5/5 | 5/5 | 4/5 | 3/5 |
| Example 11 | 82.9% | None gassing | 86.4% | None gassing | 5/5 | 5/5 | 5/5 | 5/5 |
| Example 12 | 78.3% | None gassing | 80.5% | None gassing | 5/5 | 5/5 | 5/5 | 5/5 |
| Example 13 | 85.1% | None gassing | 88.9% | None gassing | 5/5 | 5/5 | 5/5 | 5/5 |
| Example 14 | 70.5% | None gassing | 71.1% | None gassing | 4/5 | 4/5 | 4/5 | 3/5 |
| Example 15 | 70.9% | None gassing | 70.4% | None gassing | 3/5 | 3/5 | 3/5 | 4/5 |
| Example 16 | 85.7% | None gassing | 87.9% | None gassing | 5/5 | 5/5 | 5/5 | 5/5 |
| Example 17 | 83.9% | None gassing | 84.6% | None gassing | 5/5 | 5/5 | 5/5 | 5/5 |
| Example 18 | 85.5% | None gassing | 85.9% | None gassing | 5/5 | 5/5 | 5/5 | 5/5 |
| Example 19 | 86.3% | None gassing | 88.5% | None gassing | 5/5 | 5/5 | 5/5 | 5/5 |
| Example 20 | 87.3% | None gassing | 89.5% | None gassing | 5/5 | 5/5 | 5/5 | 5/5 |
| Example 21 | 82.3% | None gassing | 82.1% | None gassing | 5/5 | 5/5 | 5/5 | 5/5 |

The following can be learned from the results in Table 2. It can be learned from the comparative examples and examples that a mutual synergistic effect is produced by adjusting and controlling a ratio of a content of an electrolyte additive to a width of a positive tab and a ratio of a positive tab welding area to the width of the positive tab, so that high-temperature cycling performance of a prepared battery can be improved effectively, a metal conductor and a tab tape of the tab are more resistant to high temperature and high voltage, and an adhesive layer is stabilized. In addition, liquid leakage can be prevented, and safety performance of battery cell under conditions such as dropping of an entire battery cell and high furnace temperature can be improved.

The foregoing describes implementations of the present disclosure. However, the present disclosure is not limited to the foregoing implementations. Any modifications, equivalent replacements, improvements, or the like made without departing from the spirit and principle of the present disclosure shall fall within the protection scope of the present disclosure.

## Claims

1. A battery, **characterized by** comprising a positive electrode plate (1), a negative electrode plate, an electrolyte solution, and a separator;
the positive electrode plate (1) comprises a positive electrode current collector, a positive electrode active material layer, and a positive tab (2); the positive electrode active material layer is arranged on at least one side surface of the positive electrode current collector; and the positive tab (2) is welded with the positive electrode current collector to form a positive electrode welding region (5);
the electrolyte solution comprises an organic solvent, an electrolyte additive, and a lithium salt; and the electrolyte additive comprises a cyano compound; and
an area of the positive electrode welding region (5) is A mm²; a percentage of a mass of the cyano compound in a total mass of the electrolyte solution is B wt%; a width of the positive tab (2) is C mm; a ratio of A to B ranges from 3 to 75; and a ratio of A to C ranges from 4 to 60;
the lithium salt comprises a lithium bis(trifluoromethanesulphonyl)imide.

2. The battery according to claim 1, **characterized in that** the ratio of A to B ranges from 3 to 30; and/or, the ratio of A to C ranges from 4 to 35.

3. The battery according to claim 1 or 2, **characterized in that** the area A of the positive electrode welding region (5) ranges from 10 mm² to 650 mm², preferably from 20 mm² to 350 mm²;and/or,
the width C of the positive tab (2) ranges from 1.5 mm to 25 mm, preferably from 2 mm to 10 mm.

4. The battery according to any one of claims 1 to 3, **characterized in that** the mass percentage B of the cyano compound ranges from 0.5 wt% to 10 wt%, preferably from 2 wt% to 8 wt%.

5. The battery according to any one of claims 1 to 4, **characterized in that** the cyano compound comprises at least one of 1,2-bis(cyanoethoxy)ethane, 1,2,3-tris(2-cyanoethoxy)propane, adiponitrile, succinonitrile, 1,3,6-hexanetricarbonitrile, glutaronitrile, 1,5-dicyanopentane, 1,6-dicyanohexane, 1,7-dicyanoheptane, 1,8-dicyanooctane, 1,9-dicyanononane, 1,10-dicyanodecane, 1,12-dicyanododecane, tetramethylsuccinonitrile, 2-methylglutaronitrile, 2,4-dimethylglutaronitrile, 2,2,4,4-tetramethylglutaronitrile, 1,4-dicyanopentane, 2,6-dicyanoheptane, 2,7-dicyanooctane, 2,8-dicyanononane, 1,6-dicyanodecane, 1,2-dicyanobenzene, 1,3-dicyanobenzene, 1,4-dicyanobenzene, 3,5-dioxa-pimelonitrile, 1,4-bis(cyanoethoxy)butane, ethylene glycol bis(2-cyanoethyl) ether, diethylene glycol bis(2-cyanoethyl) ether, triethylene glycol bis(2-cyanoethyl) ether, tetraethylene glycol bis(2-cyanoethyl) ether, 3,6,9,12,15,18-hexaoxeicosanic acid dinitrile, 1,3-bis(2-cyanoethoxy)propane, 1,4-bis(2-cyanoethoxy)butane, 1,5-bis(2-cyanoethoxy)pentane, ethylene glycol di(4-cyanobutyl) ether, 1,4-dicyano-2-butene, 1,4-dicyano-2-methyl-2-butene, 1,4-dicyano-2-ethyl-2-butene, 1,4-dicyano-2,3-dimethyl-2-butene, 1,4-dicyano-2,3-diethyl-2-butene, 1,6-dicyano-3-hexene, 1,6-dicyano-2-methyl-3-hexene, 1,6-dicyano-2-methyl-5-methyl-3-hexene, 1,3,5-pentanetricarbonitrile, 1,2,3-propanetricarbonitrile, 1,2,6-hexanetricarbonitrile, 1,2,3-tris(2-cyanoethoxy)propane, 1,2,4-tris(2-cyanoethoxy)butane, 1,1,1-tris(cyanoethoxymethylene)ethane, 1,1,1-tris(cyanoethoxymethylene)propane, 3-methyl-1,3,5-tris(cyanoethoxy)pentane, 1,2,7-tris(cyanoethoxy)heptane, 1,2,6-tris(cyanoethoxy)hexane, or 1,2,5-tris(cyanoethoxy)pentane; and/or,
the cyano compound comprises at least one of compounds represented by Formula (1) to Formula (4):

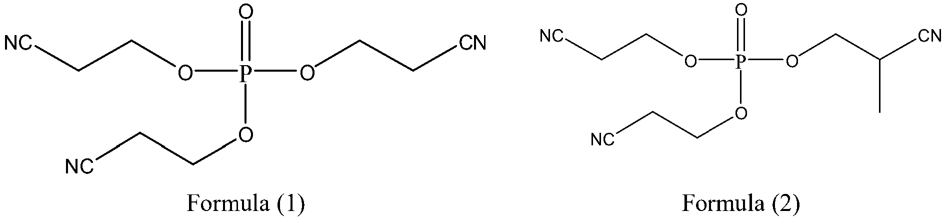

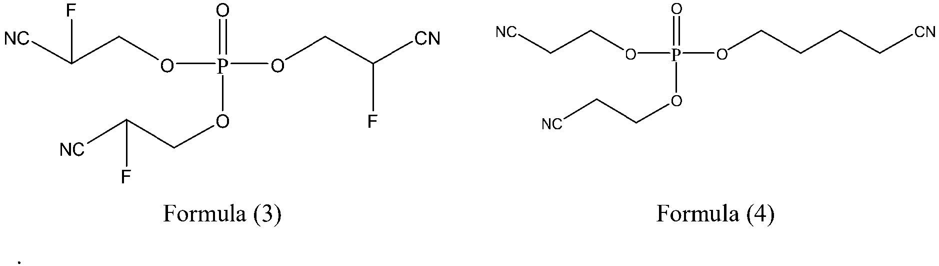

6. The battery according to claim 5, **characterized in that** the cyano compound comprises at least one of the compound represented by Formula (1), the compound represented by Formula (3), 1,2-bis(cyanoethoxy)ethane, 1,3,6-hexanetricarbonitrile, glycerol trinitrile, succinonitrile, adiponitrile, glutaronitrile, 1,4-dicyano-2-butene, 1,4-dicyano-2-methyl-2-butene, 1,4-dicyano-2-ethyl-2-butene, 1,4-dicyano-2,3-dimethyl-2-butene, or 1,4-dicyano-2,3-diethyl-2-butene;
preferably, the cyano compound comprises a combination of the compound represented by Formula (1), the compound represented by Formula (3), and HTCN, or a combination of 1,4-dicyano-2-butene, adiponitrile, and 1,3,6-hexanetricarbonitrile, or a combination of 1,4-dicyano-2-butene, succinonitrile, adiponitrile, and 1,3,6-hexanetricarbonitrile, or a combination of 1,4-dicyano-2-butene, succinonitrile, adiponitrile, 1,2-bis(cyanoethoxy)ethane, and 1,3,6-hexanetricarbonitrile.

7. The battery according to any one of claims 1 to 6, **characterized in that** the area of the positive electrode welding region (5) accounts for more than 60% of an area of a positive electrode contact region; and the area of the positive electrode contact region is an area of a region formed by projecting the positive tab (2) onto a surface of the positive electrode plate (1).

8. The battery according to any one of claims 1 to 7, **characterized in that** the positive tab (2) comprises a metal conductor (3) and a tab tape (4) covering a surface of the metal conductor (3); preferably, the tab tape (4) comprises a first resin outer layer, a second resin core layer, and a third resin inner layer; and the second resin core layer is arranged between the first resin outer layer and the third resin inner layer;
preferably, the first resin outer layer has a melting point ranging from 100°C to 140°C and a thickness ranging from 10 µm to 30 µm;
preferably, the second resin core layer has a melting point ranging from 140°C to 180°C and a thickness ranging from 30 µm to 70 µm; and
preferably, the third resin inner layer has a melting point ranging from 100°C to 140°C and a thickness ranging from 10 µm to 30 µm.

9. The battery according to claim 8, **characterized in that** a first end of the metal conductor (3) is a welding end; a second end, opposite the first end, of the metal conductor (3) is a protruding end; a tab tape region is formed between the welding end and the protruding end; the tab tape (4) is provided on the tab tape region; and the tab tape (4) surrounds the metal conductor (3) for one circle.

10. The battery according to claim 8 or 9, **characterized in that** a material of the first resin outer layer is one or more of a propylene-ethylene copolymer, a butene-propylene copolymer, polyethylene, polypropylene, maleic anhydride-grafted modified polypropylene, or metallocene-modified polypropylene; and/or,
a material of the second resin core layer is one or both of polypropylene or anhydride-grafted modified polypropylene; and/or
a material of the third resin inner layer is one or more of a propylene-ethylene copolymer, a butene-propylene copolymer, polyethylene, polypropylene, maleic anhydride-grafted modified polypropylene, or metallocene-modified polypropylene.

11. The battery according to any one of claims 8 to 10, **characterized in that** the third resin inner layer is in contact with the metal conductor (3).

12. The battery according to any one of claims 1 to 11, **characterized in that** the positive electrode plate (1) further comprises adhesive paper (6); and the adhesive paper (6) is arranged on a surface, away from the positive electrode current collector, of the positive tab (2); and
preferably, the adhesive paper (6) is in contact with a tab tape (4) on a surface of the positive tab (2).

13. The battery according to any one of claims 1 to 12, **characterized in that** a charge cut-off voltage of the battery is 4.45 V or above.

14. The battery according to any one of claims 1 to 13, **characterized in that** the negative electrode plate comprises a negative electrode current collector and a negative electrode active material layer coated on a surface of either or both sides of the negative electrode current collector; the negative electrode active material layer comprises a negative electrode active material; and the negative electrode active material comprises a silicon-carbon negative electrode material and/or a carbon-based negative electrode material;
preferably, the carbon-based negative electrode material comprises at least one of artificial graphite, natural graphite, mesocarbon microbead, hard carbon, or soft carbon.

15. The battery according to any one of claims 1 to 14, **characterized in that** the lithium salt comprises at least one of lithium hexafluorophosphate (LiPF₆), lithium difluorophosphate (LiPO₂F₂), lithium difluoro(oxalato)borate (LiDFOB), lithium bis(fluorosulfonyl)imide (LiTFSI), lithium difluorobis(oxalato)phosphate, lithium tetrafluoroborate, lithium bisoxalate borate, lithium hexafluoroantimonate, lithium hexafluoroarsenate, lithium bis(pentafluoroethanesulfonyl)imide, or tris(trifluoromethylsulfonyl)methyl lithium; and/or,
relative to a total mass of the electrolyte solution, a concentration of the lithium salt ranges from 1 mol/L to 6 mol/L.
